# EUROPÄISCHE PATENTSCHRIFT

(11) **EP 1 761 759 B1**
(45) Veröffentlichungstag und Bekanntmachung des Hinweises auf die Patenterteilung: **21.10.2009**
(21) Anmeldenummer: 05757765.2
(22) Anmeldetag: 23.04.2005
(51) Int. Cl.: G01N 21/954, G01M 3/00, G01M 3/38

(54) **VERFAHREN ZUR STEUERUNG EINER ROHRREVISIONSANLAGE UND ZUR AUSWERTUNG DER REVISIONSDATEN**
METHOD FOR CONTROLLING A PIPE INSPECTION SYSTEM AND FOR EVALUATING THE INSPECTION DATA
PROCEDE POUR COMMANDER UNE INSTALLATION DE CONTROLE DE TUBES ET POUR EVALUER LES DONNEES DE CONTROLE

(30) Priorität: 23.06.2004 WO PCT/EP2004/006780
(43) Veröffentlichungstag der Anmeldung: 14.03.2007
(73) Patentinhaber: RICO GESELLSCHAFT FüR MIKROELEKTRONIK mbH, D-87437 Kempten (DE)
(72) Erfinder: HINN, Albert, K., 73061 Ebersbach (DE)
(74) Vertreter: Kloiber, Thomas
(86) Internationale Anmeldenummer: PCT/EP2005/004381
(87) Internationale Veröffentlichungsnummer: WO 2006/000271

(56) Entgegenhaltungen:
- PATENT ABSTRACTS OF JAPAN Bd. 013, Nr. 256 (P-884), 14. Juni 1989 (1989-06-14) & JP 01 054235 A (NKK CORP), 1. März 1989 (1989-03-01)

## Beschreibung

Die Erfindung betrifft ein Verfahren zum Betreiben eines fahrbaren Rohrinspektionsgerätes, das einen, um zwei rechtwinklig zueinander liegende Achsen verschwenkbaren Kamerakopf aufweist, dessen Schwenkbewegungen von fernsteuerbaren Motoren bewirkt und mindestens eine Schwenkbewegung mittels eines Drehwinkel-Meßwertgebers gemessen wird, dessen Messsignal auf einem Monitor darstellbar und auswertbar ist.

Rohre werden mittels ferngesteuerter Wagen, auf denen Kameras montiert sind, visuell überprüft. Ein solcher Kamerawagen ist beispielsweise aus der WO 2004/113861 A1 bekannt. Die auf dem Wagen montierte Kamera oder mehrere davon zu unterschiedlichen Zwecken mit unterschiedlichen Optiken können gedreht, geschwenkt und mittels einer elektrischen Hubschere auch in der Höhe variiert werden. Die Kameras erzeugen einen Bildstrom, der ausgewertet wird. Zur Dokumentation der festgestellten Schadstellen ist es wünschenswert, die Lage der Schadstellen dokumentieren zu können. Z. B. ist aus der DE-A 36 05 654 ein Verfahren bekannt, bei dem die elektrischen Signale von Drehwinkel-Messwertgebem auf dem Monitor außerhalb des Rohres digital angezeigt werden. Um die Schadstelle zu erkennen, muss die Kamera in der jeweiligen Blickrichtung scharfgesteltt, d. h. focusiert werden. Eine Abschätzung der Größenordnung einer Schadstelle ist mit diesem Verfahren nur unvollkommen möglich.

Zur Verbesserung der Auswertemöglichkeit ist in der EP 0 623 814 A2 ein Verfahren zum Betreiben eines fahrbaren Rohrinspektionsgerätes vorgeschlagen, das ein um zwei rechtwinkelig zueinander liegende Achsen verschwenkbaren Kamerakopf aufweist, dessen Schwenkbewegung von fernsteuerbaren Motoren bewirkt und mittels Drehwinkel-Messwertgebem gemessen werden, deren Signale auf einem Monitor darstellbar und auswertbar sind. Die Messsignale der Drehwinkel-Messwertgeber werden einer Auswerteelektronik zugeführt, die nach Eingabe oder Messung von rohrspezifischen Konstanten, welche dem Rohrradius und dem Rohrachsabstand des Kameraobjektivs proportional sind, die Sichtlinienlänge zwischen Kameraobjektiv und einem Zielpunkt auf der Rohrinnenfläche errechnet und in Abhängigkeit von diesem verschiede Werte durch Berechnung mittels einer Auswerteelektronik ermitteln kann.

Auf diese Weise konnten Schadstellen hinsichtlich ihrer Position und Lage und deren Abstände digital dokumentiert werden.

Um von diesen Einzelbetrachtungen unterschiedlicher Objekte zu einer Erfassung des gesamten Bohrrohres zu kommen, und alle Orte des Rohrrohres unter beliebigen Winkeln zu betrachten, schlägt die EP 1 022 553 A2 vor, bei einem Kamerawagen mit einer Beleuchtungseinrichtung und zwei elektronischen Kameras, von denen die eine an einem vorderen Ende des Kamerawagens angeordnet ist, und die andere Kamera an dem hinteren Ende des Kamerawagens angeordnet ist, jeweils mit einem hemisphärischen Raum erfassenden Weitwinkelobjektiv auszurüsten, wobei die optischen Achsen der beiden für Weitwinkelobjektive parallel zueinander in entgegengesetzter Richtung weisend verlaufen. Die aufgenommenen Bilder der beiden erfassten hemisphärischen Räume werden in bestimmen Zeit- oder Raumabständen rechnerisch zu einem sphärischen Vollbild unter Berücksichtigung des Abstandes der optischen Zentren der beiden Kameras zusammengesetzt.

Die jeweilige Lage der Kameraeinheiten im Raum beim Nehmen einer Ablichtung kann dabei erfasst und gespeichert werden, um eine Roll- oder Neigungsabweichung der beiden Kameras beim Zusammensetzen zu kompensieren.

Die Gewinnung dieser digitalen vollsphärischen Panoramabilder lässt es zu, anhand der gespeicherten Bilddaten nachträglich virtuell durch das Rohr hindurch zu fahren, wobei ein kritischer Ort dann rechnerisch angefahren werden kann, in dem die entsprechenden Kugelkoordinaten und Streckenpositionen des zu betrachtenden Ortes eingegeben werden.

Nachteilig an diesem Verfahren ist, dass ein sehr hoher Rechenaufwand zum Zusammensetzen der sphärischen Bilder notwendig ist und ein besonders hoher Datenstrom den entsprechend großen Speichern zugeführt werden muss. Die Auswertung gliedert sich in zwei Schritte. Sofortige Entscheidungen sind mit diesem Verfahren nicht möglich.

Da die Interpretation der Bilddaten eine genaue Orientierung innerhalb des Rohrs erfordern und diese visuell nur bei Vorhandensein von Restflüssigkeiten im Rohr möglich ist, schlägt die GB 2 342 419 A das Vorsehen zweier unterschiedlicher Kameras vor, wovon eine in Rohrrichtung zur Orientierung und eine zweite radial auf die Oberfläche des Rohrs gerichtet ist. Diese seitwärts weisende Kamera kann um die Längsachse des Inspektionskopfes gedreht werden.

Den Nachteil der perspektivisch verkürzten Bilder, die kaum eine exakte messtechnische Auswertung ermöglichen, wird bei der DE 42 06 609 A1 mit einem modifizierten Kamerakopf mit zwei optischen Kanälen begegnet. Da verläuft die Blickrichtung des ersten optischen Kanals, der zur Steuerung des Fahrwagens genutzt wird, in Rohrrichtung und die des zweiten optischen Kanals, der die Bilder der Rohrinnenwand liefert, senkrecht zur Rohrwand. Die beiden senkrecht zueinander stehenden optischen Kanäle des Kamerakopfes arbeiten in verschiedenen Spektalbereichen und werden über eine optische Baugruppe, z. B. Strahlteiler, so zusammengesetzt, dass sie eine gemeinsame optische Achse besitzen. Die von einer CCD-Farbmatrix aufgenommenen Bilder werden durch eine Signalverarbeitungsgruppe wieder in zwei Schwarz-Weiß-Bilder getrennt, wovon eines die Bildinformation von der Rohrwand und das andere die Bildinformation der zweiten Blickrichtung beinhaltet.

Zur besseren Orientierung beschreibt die DE 40 17 238 A1 ein Schadenordnungsverfahren und eine Vorrichtung zur Ortung von Undichtigkeiten in Kanälen mit Hilfe eines GEO-Radars. Zur Korrelation der Messergebnisse mit den zugehörigen räumlichen Orten sind Sensoren zur Lageorientierung des Fahrgestells und/oder der Antennen vorgesehen. Diese können u. a. mittels Schwerkraft oder Inertialsystem der Ermittlung der benötigten Ortsinformationen dienen und sollten u. a. eine Messung der im Rohr zurückgelegten Strecke ermöglichen. Die Darstellung des Inspektionsergebnisses erfolgt als Laufzeitdiagramm. Mit solchen Verfahren lassen sich auch Schadstellen außerhalb der Rohre im Erdreich orten.

Nachteilig an allen Verfahren ist, dass keine automatisierte einfache Inspektion von Kanälen möglich ist. Im Allgemeinen werden die Bilddaten zunächst gewonnen und quantitativ erst in einem zweiten Arbeitsgang ausgewertet.

Aufgabe der Erfindung ist es, ein Verfahren zur Steuerung einer Rohrrevisionsanlage und zur Auswertung der Revisionsdaten anzugeben, das auch eine verbesserte Auswertung und sowohl eine quantitative wie auch qualitative Dokumentation des Inspektionsergebnisses ermöglicht.

Diese Aufgabe wird bei einem gattungsgemäßen Verfahren dadurch gelöst, dass zwei Sätze von Bildinformationen erstellt werden, wovon ein erster Satz Bildinformationen der gesamten Rohroberfläche enthält, und ein zweiter Satz Informationen von Details der Rohroberfläche enthält und eine automatische Zuordnung der beiden Informationssätze zueinander mindestens hinsichtlich des Ortes im Rohrabschnitt und der Winkellage erfolgt. Der erste Satz der Bildinformationen dient der vollständigen bildlichen Dokumentation der inneren Rohroberfläche. Dieser wird zusätzlich zum zweiten Satz erstellt, der zur Dokumentation von Details dient. Erfindungsgemäß kann also zusätzlich zur Dokumentation von Schäden einer Rohrleitung auch lückenlos der aktuelle Zustand der Rohrleitung insgesamt erfaßt und auf Datenträgern oder Papier dauerhaft gespeichert werden. Bei der Sanierung bzw. Überwachung von Rohrabschnitten ist nämlich nicht nur der einzelne Schaden von Bedeutung, sondern auch der Nachweis, daß keine weiteren Schäden vorliegen. Die Abwicklung des Umfangs gibt ein solches lückenloses Bild. Das Detailbild erlaubt darüber hinaus die genaue Schadensdiagnose: Zur Verknüpfung enthalten die Sätze auch Informationen zum Ort und Winkellage der Bildinformation.

In Ausgestaltung des Verfahrens ist mit Vorteil vorgesehen, dass der erste Satz von Bildinformationen, vorzugsweise einer Verarbeitung zur Erkennung von Mustern, insbesondere von Kanten, unterzogen wird und daraus Signale, vorzugsweise zur Weiterleitung an eine Steuerung, erzeugt werden. Diese Maßnahme erlaubt die Automatisierung des Meßvorganges.

Wenn der erste Satz von Bildinformationen in Form einer bildlichen Abwicklung der Rohroberfläche zusammengesetzt, gespeichert und/oder angezeigt wird, kann der Inpekteur den Fortschritt überwachen und kontrollieren, so daß er bei unerwarteten Schwierigkeiten auch eingreifen kann.

Einen detaillierten Eindruck über den Zustand des Rohreres oder das Ausmaß von Schäden läßt sich gewinnen, wenn der zweite Satz von Bildinformationen in Form eines Einzelbildes, z. B. der Abwicklung einer Rohrfügestelle oder eines Bildes eines Abzweiges oder einer Schadstelle, zusammengesetzt, gespeichert und/oder dargestellt wird.

In weiterer Ausgestaltung des Verfahrens ist vorgesehen, daß die Inspektion von Details zeitlich getrennt zur Aufnahme der Abwicklung erfolgt. Dadurch kann insbesondere die notwendige Bandbreite zur Datenübertragung mit Vorteil verringert werden. Beispielsweise können die Details bei der Fahrt des Kamerawagens in das Rohr inspiziert werden. Zu diesem Zweck wird die Kamera mit der höheren Auflösung und Vergrößerung genutzt, die dann durch ihre kardanische Aufhängung das Rohr in allen Richtungen abtasten kann. Vor der Rückfahrt wird dann die optische Achse der anderen Kamera parallel zur Kamerawagenachse geschwenkt und während der Rückfahrt mittels einer geeigneten Optik, beispielsweise mittels eines Fischauges, der gesamte Rohrumfang gescannt und aufgezeichnet.

Eine Möglichkeit besteht dabei darin, von dem digitalisierten Bild des Fischauges nur jeweils eine oder mehrere ringförmige Bildzeilen zu nutzen und diese mittels eines Computers, vorzugsweise in Realzeit zu einer Abwicklung des Umfangs des inspizierten Rohrabschnitts zusammenzusetzen. Dabei kann die Anzahl der Bildzeilen in Abhängigkeit der von der Kamera gelieferten Frequenz der Bilder, sogenannter Bildfrequenz, und der Fahrgeschwindigkeit des Kamerawagens rechnerisch angepaßt werden. Zu diesem Zweck sieht das erfindungsgemäße Verfahren vor, daß die Aufnahme des ersten Satzes, der die Bildinformationen der Abwicklung enthält, während einer Fahrt durch den zu inspizierenden Rohrabschnitt, vorzugsweise in einer Richtung und mit vorzugsweise gleichbleibender Geschwindigkeit erfolgt.

Eine weitere Möglichkeit besteht z.B. darin, die Bilder zu einer Abwicklung mittels bekannter Software zusammenzufügen. Diese Software fügt Bilder aufgrund der ähnlichen Bildelemente zusammen.

Die Auswertung des Inspektionsergebnisses wird besonders erleichtert, wenn eine automatische Zuordnung eines oder mehrerer der inspizierten Details zu einem Ort des abgewickelten Umfangs erfolgt. Dadurch kann dauerhaft der Schadensort mit seiner detaillierten Dokumentation in eindeutigen Zusammenhang mit seiner genauen Lage im inspizierten Rohrabschnitt gebracht werden. Dies geschieht durch entsprechende softwaregestützte Verknüpfung der Lagekoordinaten mit dem gewonnenen Bildmaterial. Die Lage bzw. der jeweilige Ort des Kamerawagens kann beispielsweise durch Messung der abgewickelten Kabellänge in Verbindung mit einem Referenzpunkt bestimmt werden.

Weitere vorteilhafte Ausgestaltungen des Verfahrens sind in den Ansprüchen 8 bis 17 beschrieben.

Das automatische Mess- und Auswerteverfahren läuft wie folgt ab:
Der im Rohr befindliche Kamerawagen und die Kameras werden eingeschaltet. Die Kamera ist parallel zur Rohrachse ausgerichtet. Die Kameraachse wird mittels elektrisch angetriebenen Parallelogrammlenkern in die Rohrachse gehoben. Dies kann beispielsweise durch geeignete Verarbeitung des Bildstromes erfolgen, der das Erreichen der Rohrachse dadurch signalisiert, dass das Bild zentriert ist. Dann wird der Fahrwagen in Gang gesetzt und in zeitlich oder örtlich regelmäßigen Schritten zeilenweise der Rohrumfang visuell gescannt. Das Scannen kann beispielsweise durch das Aneinanderfügen von ringförmigen Zeilen einer sog. Fisheyekamera erfolgen.

Eine andere Möglichkeit besteht darin, eine auf die Rohrwand gerichtete Kamera stetig um die Rohrachse zu drehen. Durch die Überlagerung der Drehbewegung der Kamera und der Fahrbewegung des Fahrwagens ergibt sich eine wendelförmige Abtastung der Rohrinnenfläche, wobei sich diese Bildinformation mit geeigneten Algorithmen zu einem entsprechenden Bild dieser Kamera aneinander fügen lassen.

Der Bildstrom der Rohrwandoberfläche wir durch bekannte mathematische Verarbeitungsverfahren, sogenannte Filter, die im Bildstrom zu einer Kantenerkennung führen, verarbeitet. Sobald durch die Filterung die Anwesenheit einer Fügestelle erkannt wird, setzt das Filtersignal den Fahrwagen still und kehrt die Fahrtrichtung des Fahrwagens um, um den Fahrwagen um eine Strecke zu verfahren, die dem optischen Abstand der den Rohrumfang scannenden Kamera von der hochauflösenden Kamera entspricht. Dabei wird die optische Achse der hochauflösenden Kamera um 90 Grad geschwenkt, so dass sie auf die Rohrwand gerichtet ist. Auch dieser Bildstrom wird vorteilhaft mit einem Kantenerkennungsfilter analysiert. Das Filtersignal kann dazu verwendet werden, um den Fahrwagen so zu verfahren, dass die Fügestelle mittig im Bild der hochauflösenden Kamera liegt. Sobald die Fügestelle durch den Kamerawagen angefahren ist, zoomt die hochauflösende Kamera die Fügestelle bei maximaler Auflösung ins Bild und wird um 360 Grad um die Rohrachse gedreht.

Auf diese Weise wird ein hoch aufgelöstes Bild des Rohrumfangs an der Fügestelle automatisch erzeugt und abgespeichert.

Nach der Aufnahme der Fügestelle schwenkt die hochauflösende Kamera wieder in die Achse des Rohrs und setzt den Fahrwagen wieder in Richtung des zu inspizierenden Rohrabschnitts in Gang bis wie zuvor beschrieben die nächste Fügestelle erkannt wird.

Dieser Verfahrensablauf wiederholt sich solange, bis eine voreingestellte Strecke des Rohrs durchfahren wurde.

Alternativ zum vorbeschriebenen Ablauf kann auch das horizontal nach vorne gerichtete Bild der hochauflösenden Kamera in konzentrische Bildabschnitte geteilt und so gefiltert werden, dass die Fügestellen und deren Kanten Mittels eines geeigneten digitalen Bildfilters erkannt werden. Beim weiteren Vorfahren des Fahrwagens schwenkt die hochauflösende Kamera gleichzeitig so lange auf die Fügestelle gerichtet mit, bis sie vertikal auf die Rohrwand gerichtet ist und der Fahrwagen fährt so lange nach, bis die Fügestelle etwa zentrisch im Bild angeordnet ist. Nach Stillsetzen des Fahrwagens wird dann wiederum die Kamera um die Rohrachse um 360 Grad gedreht, so dass auf diese Weise ebenfalls eine Abwicklung der Fügestelle in hoher Auflösung dargestellt werden kann. Bei diesem Verfahren reicht eine einzige Kamera.

Dann schwenkt die optische Achse der Kamera wiederum in die Rohrachse und der Fahrwagen wird zur Fortsetzung der Inspektionsfahrt in Gang gesetzt.

Auch dieser Vorgang wird so lange wiederholt, bis eine voreingestellte Inspektionsstrecke erreicht ist.

In weiterer alternativer Ausführung des automatischen Messverfahrens ist es möglich, die hochauflösende Kamera ständig während des Fahrens des Fahrwagens senkrecht auf die Rohrwandung gerichtet rotieren zu lassen. Es ergibt sich dadurch ein Bilddatenstrom, der wendelförmig zu einem Bild der Rohroberfläche zusammengefügt werden kann. Die Bilddaten dieses Rohrs werden ebenfalls einem Kantenerkennungsfilter zugeleitet, dass bei Erkennen einer Kante, sobald diese etwa mittig im Blickwinkel der Kamera angeordnet ist, den Wagen stillsetzt und anschließend die Daten über einen Kameraschwenk von 360 Grad um die Rohrachse als Scan der Fügestelle speichert. Danach wird der Kamerawagen wieder in gleicher Richtung wie zuvor in Gang gesetzt. Vorteilhaft an dieser Lösung ist, dass keine zweite Kamera notwendig ist.

Dem Bilderstrom wird durch geeignete Schwerkraftsensoren und Winkelgeber die in genauer Position und Lage der Kamera synchron zugeordnet. Diese Daten dienen dazu das Inspektionsergebnis in vorteilhafter Weise zu dokumentieren und zu speichern.

Auch die Dokumentation von Abzweigungen oder lokalen Schäden ist automatisch möglich. Dazu wird der zweite Satz der Bildinformationen einer geeigneten Filterung unterzogen, die derartige Schäden erkennt und den Fahrwagen festsetzt. Nach einem etwaig notwendigen Verfahren des Fahrwagens um den optischen Abstand des gefilterten und des dokumentierenden Bildstromes wird in dieser Position des Fahrwagens wiederum die dokumentierende, vorteilhaft hoch auflösende, Kamera so lange geschwenkt, bis der Abzweig oder die Schadensstelle etwa zentrisch im Blickwinkel der Kamera liegt und dann das entsprechende Bild mit zugehörigen Winkel und Ortsinformationen gespeichert werden kann.

Sobald das Bild gespeichert ist, schwenkt dann die dokumentierende hochauflösende Kamera wieder in die Achse des Rohrs und die Inspektionsfahrt wird fortgesetzt.

Selbstverständlich kann auch während einer kontinuierlichen Fahrt durch den zu inspizierenden Rohrabschnitt der Satz der Bildinformation, die den Umfang des Rohrabschnitts enthalten, getrennt von dem anderen Satz von Bildinformationen, die die Details enthalten erzeugt werden. Durch die beschriebene Filterung werden beispielsweise zunächst der Ort der Fügestellen festgestellt und dann bei der Rückfahrt der Kamerawagen ortsgerecht an den Fügestellen angehalten, um dann durch die senkrecht auf die Rohroberfläche gerichtete Kamera 360 Grad des Rohrumfangs als Bild aufzunehmen. Diese beiden Sätze von Bildinformationen können dann über die Ortsinformation des Kamerawagens zueinander in Bezug gesetzt werden. Auch dieses Inspektionsverfahren läuft analog zu den vorbeschriebenen Alternativen automatisch ab.

Die Zeichnung dient zum besseren Verständnis der Erfindung. Anhand der Figuren der Zeichnung wird ein bevorzugtes Ausführungsbeispiel näher erläutert.

Dabei zeigt
- Fig. 1:: eine schematische Darstellung eines bekannten Kamerawagens,
- Fig.2:: eine Darstellung der Inspektionsdaten in Form eines schematisierten Monitorbildes,
- Fig. 3:: eine schematische Darstellung des Verfahrens zur Auswertung der Bilddaten,
- Fig. 4:: schematisch eine Seitenansicht eines Fahrwagens mit Parallelogrammlenkern,
- Fig. 5:: eine andere Darstellungsweise der Inspektionsdaten in Form eines schematisierten Monitorbildes und
- Fig. 6:: ein Blockdarstellung der wesentlichen Teile der Inspektionsanlage.

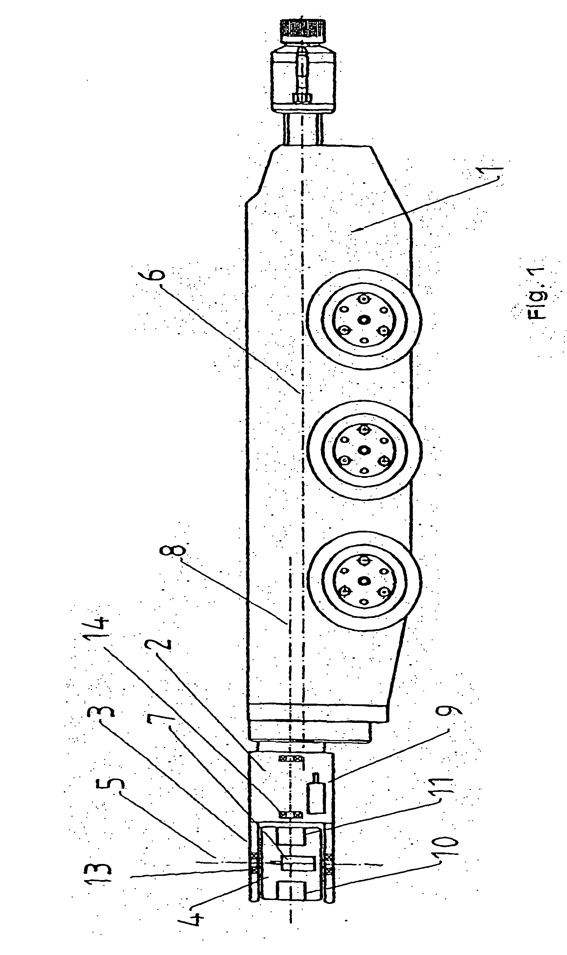

In Figur 1 ist ein Kamerawagen 1 mit Fahrwerk und Beleuchtungseinrichtung zur Inspektion von Rohrleitungen dargestellt. Der Kamerawagen ist mit der Umgebung außerhalb des Rohres mittels Daten-und Energieversorgungskabeln verbunden. Diese sind außerhalb des Rohres auf einer oder mehreren Kabelhaspeln aufgerollt und können entsprechend der Verfahrtiefe abgerollt werden. Es ist natürlich auch denkbar, den Kamerawagen mit einer Energieversorgungseinrichtung, insbesondere einer Batterie oder einem Akku zu versehen. Für die Übertragung von Steuer und Datensignalen sind dann entsprechende Sende- und/oder Empfangseinrichtungen vorgesehen.

An der Vorderseite des Kamerawagens ist eine Gelenkgabel 2 vorgesehen. Zwischen den beiden Armen 3 der Gelenkgabel 2 ist ein rotierbares Gehäuse 4 vorgesehen. In diesem Ausführungsbeispiel ist das Gehäuse zwischen den Armen 3 um eine Achse 5 drehbar gelagert. Die Achse 5 ist orthogonal zur Fahrzeuglängsachse 6 angeordnet.

Als Mittel zum Verschwenken des Gehäuses 4 um die Achse 5 ist ein Elektromotor 7 innerhalb des Gehäuses 4 angeordnet.

Die Gelenkgabel 2 ist weiterhin um eine Achse 8, die der Längsachse der Gelenkgabel 2 entspricht, drehbar gelagert. Hierfür ist ein Elektromotor 9 innerhalb der Gelenkgabel 2 vorgesehen. Der Elektromotor 9 kann selbstverständlich auch innerhalb des Kamerawagens 1 angeordnet sein.

Das Gehäuse 4 ist also um zwei zueinander orthogonal angeordneter Achsen 5, 8 rotierbar.

Innerhalb des Gehäuses 4 sind zwei Kameras 10, 11 angeordnet. In diesem Ausführungsbeispiel handelt es sich dabei um zwei unterschiedliche Kameras. Kamera 10 hat einen Öffnungswinkel von max. 46 Grad und ist mit einem Objektiv mit 10-fach optischem Zoom und einer Brennweite von 4,2 bis 42 mm ausgerüstet. Bei dem Bildsensor handelt es sich beispielsweise um einen hochauflösenden CCD-Sensor.

Bei Kamera 11 handelt es sich um eine Kamera mit Fischaugen-Objektiv. Hierdurch können Aufnahmen des hemisphärischen Raumes getätigt werden. Durch Verschwenken des Gehäuses um eine oder beide Achsen kann die jeweils benötigte Kamera in die gewünschte Position, insbesondere in eine Geradeaus-Position, verfahren werden. Die Geradeaus-Position befindet sich parallel zur Fahrzeuglängsachse 6. Bei dem gezeigten Ausführungsbeispiel ist eine endlose Rotation des Gehäuses um jeweils 360 Grad um jede Achse 5, 8 möglich. Es ist aber auch eine Anordnung denkbar, bei welcher die Schwenkachse 5 nur begrenzte, durch Anschlag festgelegte Schwenkwinkel ermöglicht. Die Kameras 10 und 11 sind dann so im Gehäuse 4 angeordnet, daß jede der beiden Kameras in die Geradeaus-Position, parallel zur Fahrwagenlängsachse 6 positioniert werden kann. Zur Energie- und Datenübertragung werden hierbei nicht gezeigte Schleifringe eingesetzt.

Die beiden Kameras können aber auch in einem 90-Grad-Winkel zueinander angeordnet werden. Durch Verschwenken des Gehäuses 4 um die Achse 5 kann die jeweils benötigte Kamera 10, 11 in eine Geradeaus-Position verfahren werden.

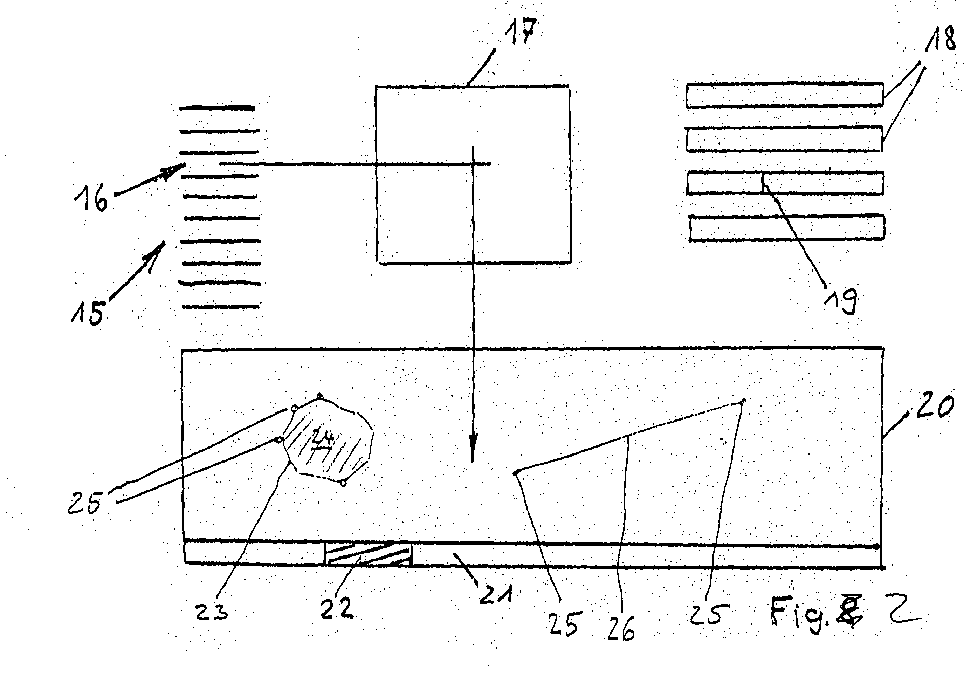

Figur 2 zeigt in der Form eines schematisierten Monitorbildes, daß aufgrund des efindungsgemäßen Verfahrens eine sehr anschauliche bequeme Anzeige des Inspektionsergebnisses möglich ist. Den einzelnen Schadensbildern, die im Detail als Datei dokumentiert vorliegen, können Namen zugeordnet werden, die in Form einer Liste 15 auf dem Monitor zur Anzeige gebracht werden. Sobald ein Element 16 der Liste 15 markiert wird, erscheint in einem Detailbildbereich 17 das aufgenommene Schadensbild in detaillierter Darstellung. Zur Orientierung, an welchem Ort des Rohrteitungsverlaufs sich der diagnostizierte Schaden befindet, dient eine relativ kleine Darstellung der Umfangsabwicklung der Rohrleitung, dargestellt in einzelnen Abschnitten 18. Der Schadensort des angezeigten Details ist durch eine auffällige Marke 19 sofort zu erkennen. Der Vollständigkeit wegen ist das abgewickelte Bild des Rohrumfangs auch vergrößert als Abwicklungsdetail 20 dargestellt.

Die Bilddaten können auch mittels eines Scrollbalkens 21 durchsucht werden. Durch Verschieben der Schiebemarke 22 wird aufgrund der softwaregestützten Verknüpfung der Bilddaten in Realzeit auch die Marke 19 durch die Abschnitte 18 verschoben, und es werden auch die Elemente 16 der Liste 15 entsprechend hervorgehoben und im Detailbereich 17 angezeigt.

Die Darstellung der Abwicklungsdetails 20 erfolgt vorzugsweise in karthesischen Koordinaten, wobei die Abszisse den Ort in Achsrichtung der Rohrleitung darstellt und die Ordinate den Umfangswinkel des momentanen Rohrleitungsdurchmessers. Allerdings ist auch eine Darstellung in anderen Koordinatensystemen möglich.

Die Darstellung in karthesischen Koordinaten bietet den Vorteil, daß sie auch anschaulich eine quantitative Schadensdokumentation zuläßt. So läßt sich z. B. nach Öffnen einer Liste mit Softwarewerkzeugen, einer sogenannten Werkzeugleiste, mit Hilfe des Cursors ein Polygon 23 um einen Schadensbereich ziehen und dessen Fläche 24 automatisch ermitteln und zur Anzeige bringen.

Ähnlich läßt sich durch Setzen zweier Punkte 25 nach Starten eines entsprechenden Softwarewerkzeugs der Abstand des Punkte 25 oder die Länge der Strecke 26 zur Anzeige bringen.

Zur Darstellung der Details wird der abgewickelte Rohrumfang vorteilhaft bei 12 Uhr, also oben, aufgeschnitten. Die exakte Lage dieses Schnitts läßt sich besonders vorteilhaft durch einen Schwerkraftsensor automatisch vorgeben. Die Sohle eines Rohrs liegt dann in der horizontalen Bildmitte.

Auf diese Weise ist aufgrund des Inspektionsverfahrens eine besonders anschauliche Darstellung und schnelle Analyse des umfangreichen Datenmaterials möglich.

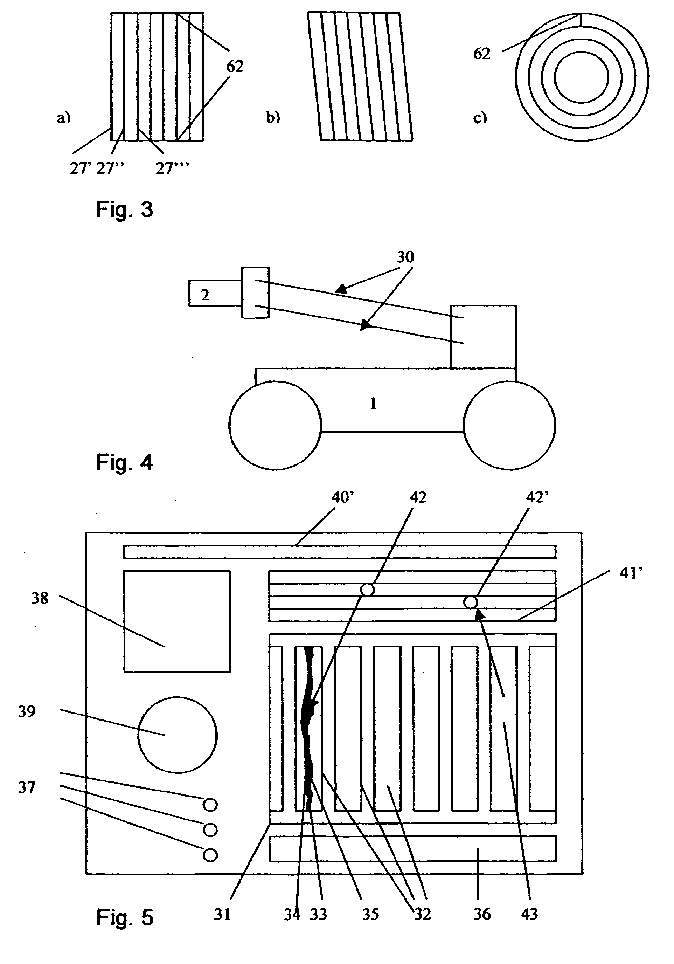

Figur 3 zeigt drei verschiedene Sätze von Bildinformationen die zu unterschiedlichen Darstellungen des Rohumfangs zusammengesetzt sind. 3 c) zeigt konzentrisch angeordnete Ringe einer Fischaugenkamera auf deren CCD. Die Informationen des äußersten konzentrischen Kreises 27 kann dann in einer Winkellage an der Stelle 62 aufgeschnitten werden und dann gemäß Figur 3a) in zeitlicher Abfolge in einzelnen Streifen 27', 27",27"', ... zu einem Bild des Rohrumfanges zusammengesetzt werden.

Lässt man eine Kamera senkrecht auf den Rohrumfang gerichtet rotieren und verfährt man gleichzeitig den Wagen, so ergeben sich nebeneinander angeordnete Parallelogramme, die ebenfalls ein Abbild des Rohrumfanges ergeben, wenn der Bildstrom beim Durchgang durch einen bestimmten Winkel einer Volldrehung unterbrochen wird und gemäß der Darstellung aneinander gereiht wird. Der Bildinhalt dieser zu Bildern zusammengeführten Streifen, die, wie dargestellt, rechteckig parallelogrammförmig oder konzentrisch sein können, kann mit bekannten Methoden der Mustererkennung untersucht werden und bei Überschreiten eines Musterschwellwertes zur Generierung von Signalen herangezogen werden.

Figur 4 zeigt schematisch die Seitenansicht eines fahrbaren Rohrinspektionsgerätes, dessen Kamera an Parallelogrammlenkern 30 in der Höhe verstellt werden kann, so dass die Kameraachse in die Mittelachse eines Rohres verfahren werden kann.

Figur 5 zeigt schematisch die Darstellungsweise des Inspektionsergebnisses auf einem Monitorbild. Im Unterschied zu der in Figur 2 gezeigten Darstellung sind hier im Bildfenster 31 nebeneinander streifenförmige Radialscans von Rohrfügestellen 33 dargestellt. Der Abstand der linken Kante 34 von der rechten Kante 35 variiert über den Umfang. Die minimalen und maximalen Werte werden automatisch ermittelt und mit einem in Feld 36 angezeigten vorgegebenen Toleranzwert verglichen. Das Ergebnis dieses Vergleichs wird ebenfalls automatisch unterschiedlichen Klassen zugeordnet und analog zu einer Ampel in den drei Farben rot, gelb, grün in der Feldgruppe 37 der Bedienperson auffällig angezeigt. In Feld 38 sind alle Werte in Zahlenform angegeben, während in Feld 39 eine Darstellung des Rohrabschnitts in axialer Richtung gezeigt ist. Die programmtechnische Statuszeile mit den zur Verfügung stehenden Befehlen ist mit 40 bezeichnet. Die Feldgruppe 41 dient zur Navigation innerhalb des zu prüfenden Rohrabschnitts. Wird beispielsweise mittels eines graphischen Eingabegeräts eine Marke 42 in die Feldgruppe 41 gesetzt, so werden in Abhängigkeit von der Position dieser Marke 42 die zugehörige Fügestelle 33 im Bildfenster 31 mit ihrem axialen Bild in Feld 39 und die zugehörigen Werte im Feld 38 angezeigt.

Eine automatische Zuordnung erfolgt auch, wenn mit dem Eingabegerät beispielsweise der Radialscan 43 aktiviert wird, dann wird der Cursor in die Position 42' verschoben und die zugehörigen Daten in den übrigen Feldgruppen angezeigt.

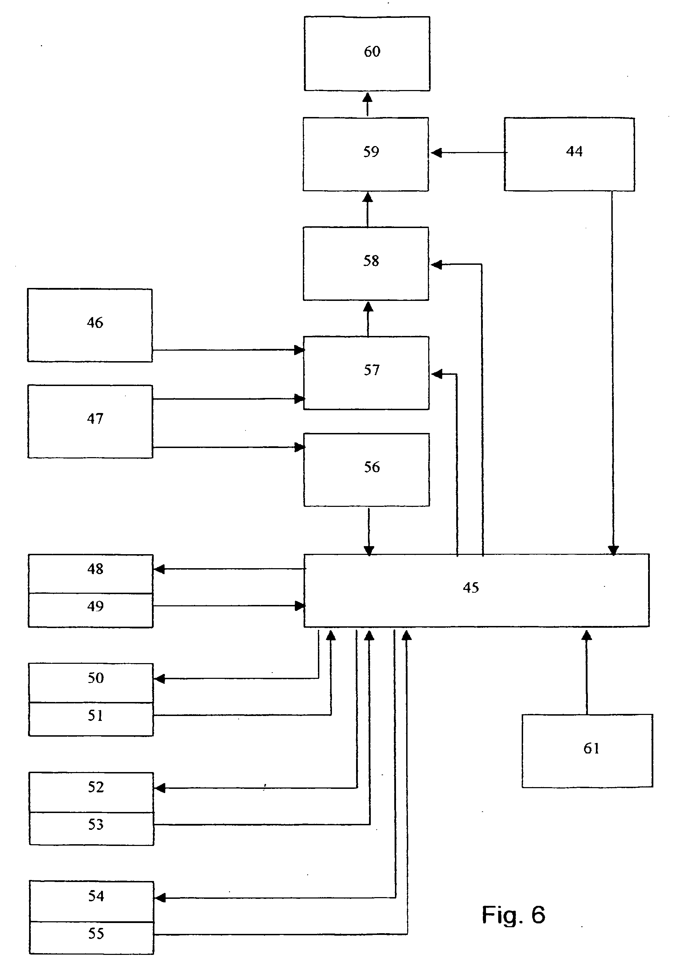

Figur 6 zeigt ein schematisches Blockschaltbild zur Erläuterung des Verfahrens des Betriebs der Rohrrevisionsanlage. Mittels eines Eingabegerätes, beispielsweise einer Tatstatur 44, kann der Start zur automatischen Inspektionsfahrt an die Steuerung 45 übergeben werden. Die Steuerung 45 fährt die Kameras 46 und 47 in die Ausgangslage. Bei einer Kombination von einer Kamera mit kleinem Blickwinkel aber hoher Auflösung und einer Weitwinkelkamera mit geringer Auflösung, wobei die Weitwinkelkamera meist ein Fischaugenobjektiv besitzt, muss nur die hochauflösende Kamera in ihre Ausgangsposition verfahren werden. Dabei wird zunächst der Schwenkantrieb 48 in die Endlage gefahren, so dass die optische Achse der hochauflösenden Kamera parallel zur Rohrachse ausgerichtet ist. Ein Endlagensignalgeber 49 meldet das Erreichen der Endlage an die Steuerung, die dann den Antrieb abschaltet.

Gleichzeitig kann der Drehantrieb 50 so lange betätigt werden, bis ein Drehwinkelgeber 51 das Erreichen der Sollage signalisiert und die Steuerung den Drehantrieb abschaltet.

Gleichzeitig kann auch der Parallelogrammlenkerantrieb 52 den Kamerakopf parallel zur Rohrachse soweit anheben, bis das ausgewertete Bildsignal der Kamera 46 eine koaxiale Lage der Kameraachse zur Rohrachse signalisiert. Alternativ kann auch ein Winkelgeber 53 das Endsignal erzeugen, sobald eine dem halben Durchmesser des zu inspizierenden Rohres erreichte Höhe der Kameraachse im Rohr erreicht ist.

Anschließend wird der Fahrmotor 54 des Wagens in Gang gesetzt. Ein Weggeber 55 meldet den zurückgelegten Weg stetig an die Steuerung zurück. Dieses Wegsignal wird synchron zu dem aus den Kameras 46 und 47 erzeugten Bildstrom hinzugespeichert, so dass die beiden Bildströme über das Signal des Weggebers miteinander verknüpft werden können. Das Signal der Kamera 47 die eine geringere Auflösung besitzt, wird in Block 56 bekannten mathematischen Verfahren zur Mustererkennung, insbesondere der Kantenerkennung, unterzogen. Der Block 56 erzeugt bei Überschreiten eines bestimmten Musterschwellwertes ein Signal, dass an die Steuerung gemeldet wird.

Dieses Signal initiiert eine automatisch ablaufende Bewegungsfolge, wie zuvor beschrieben. Beispielsweise kann die Steuerung den Wagen anhalten und die Kamera mit der höheren Bildauflösung auf ein Detail der Rohroberfläche richten.

Außerdem wird das Signal der Kamera 47, die einen ersten Satz von Bildinformationen erzeugt in Block 57 unter Berücksichtung der vom Weggeber 55 gemeldeten Weginformation winkelgerecht zu einem Bild der gesamten abgewickelten Rohroberfläche zusammengesetzt und im Speicher 58 mit zugehörigen Weginformationen abgelegt.

Die Kamera 46, die den zweiten Satz an Bildinformationen erzeugt, wird ebenfalls unter Berücksichtung der vom Weggeber 55 gemeldeten Weginformationen in Speicher 58 abgelegt. Eine im Computer 59 betriebene Software, greift auf die im Speicher 58 abgelegten Datensätze mit Bildinformationen zu und verknüpft diese über die Weginformation des Weggebers 55 und bringt diese in der beschriebenen Form zur Anzeige.

Ein auf dem Wagen montierter Schwerkraftsensor 61 dient zur Korrektur des vom Winkelgeber 51 generierten Signals, sodass unter Hinzuziehung dieser Information in Block 57 die Bildelemente immer in konstanter Lage zur Schwerkraft aufgeschnitten und zusammengesetzt werden.

### BEZUGSZEICHENLISTE

- 1: Kamerawagen
- 2: Gelenkgabel
- 3: Arme
- 4: Gehäuse
- 5: Schwenkachse
- 6: Fahrzeuglängsachse
- 7: Elektromotor
- 8: Rotationsachse
- 9: Elektromotor
- 10: Kamera
- 11: Kamera
- 12: Optische Achse
- 13: Gelenk für das Schwenken des Kamerakopfes
- 14: Drehgelenk für die Rotation des Kamerakopfes
- 15: Liste
- 16: Element
- 17: Detailbereich
- 18: Abschnitt
- 19: Marke
- 20: Abwicklungsdetail
- 21: Scrollbalken
- 22: Schiebemarke
- 23: Polygon
- 24: Fläche
- 25: Punkte
- 26: Strecke
- 27: äußerster Kreis
- 28: ..
- 29: ..
- 30: Parallelogrammlenker
- 31: Bildfenster
- 32: Radialscan
- 33: Rohrfügestelle
- 34: linke Kante
- 35: rechte Kante
- 36: Feld
- 37: Feldgruppe
- 38: Feld
- 39: Feld
- 40: Status/Befehlszeile
- 41: Feldgruppe
- 42: Marke
- 43: Radialscan
- 44: Tastatur
- 45: Steuerung
- 46: Kamera
- 47: Kamera
- 48: ..
- 49: Endlagensignalgeber
- 50: Drehantrieb
- 51: Drehwinkelgeber
- 52: Parallelogrammlenkerantrieb
- 53: Schwenkwinkelgeber
- 54: Fahrmotor
- 55: Weggeber
- 56: Block
- 57: Block
- 58: Speicher
- 59: Computer
- 60: Monitor
- 61: Schwerkraftsensor

## Patentansprüche

1. Verfahren zum Betreiben eines fahrbaren Rohrinspektionsgerätes, das einen, um zwei rechtwinklig zueinander liegende Achsen verschwenkbaren Kamerakopf aufweist, dessen Schwenkbewegungen von fernsteuerbaren Motoren bewirkt und mindestens eine Schwenkbewegung mittels eines Drehwinkel-Meßwertgebers gemessen wird, dessen Messsignal auf einem Monitor darstellbar und auswertbar ist, **dadurch gekennzeichnet, dass** zwei Sätze von Bildinformationen erstellt werden, wovon ein erster Satz Bildinformationen der gesamten Rohroberfläche enthält, und ein zweiter Satz Informationen von Details der Rohroberfläche enthält und eine automatische Zuordnung der beiden Informationssätze zueinander mindestens hinsichtlich des Ortes im Rohrabschnitt und der Winkellage erfolgt.

2. Verfahren nach Anspruch 1, **dadurch gekennzeichnet, dass** der erste Satz von Bildinformationen, vorzugsweise einer Verarbeitung zur Erkennung von Mustern, insbesondere von Kanten, unterzogen wird und daraus Signale, vorzugsweise zur Weiterleitung an eine Steuerung, erzeugt werden.

3. Verfahren nach Anspruch 1 oder 2, **dadurch gekennzeichnet, dass** der erste Satz von Bildinformationen in Form einer bildlichen Abwicklung der Rohroberfläche zusammengesetzt, gespeichert und/oder angezeigt wird.

4. Verfahren nach Anspruch 1, 2 oder 3, **dadurch gekennzeichnet, dass** der zweite Satz von Bildinformationen in Form eines Einzelbildes, z. B. der Abwicklung einer Rohrfügestelle oder eines Bildes eines Abzweiges oder einer Schadstelle, zusammengesetzt, gespeichert und/oder dargestellt wird.

5. Verfahren nach einem oder mehreren der vorstehenden Ansprüche, **dadurch gekennzeichnet, dass** die Erzeugung des ersten und des zweiten Satzes von Bildinformationen zeitlich getrennt von einander erfolgen und erst später eine Zuordnung der beiden Sätze über beim Erzeugen der Sätze synchron gespeicherte Weginformationen und/oder Winkelinformationen erfolgt.

6. Verfahren nach einem oder mehreren der vorstehenden Ansprüche, **dadurch gekennzeichnet, daß** die Aufnahme des ersten Satzes während einer Fahrt durch den zu inspizierenden Rohrabschnitt, vorzugsweise in einer Richtung und mit vorzugsweise gleichbleibender Geschwindigkeit erfolgt.

7. Verfahren nach einem oder mehreren der vorstehenden Ansprüche, **dadurch gekennzeichnet, daß** eine automatische Zuordnung eines oder mehrerer der inspizierten Details zu einem Ort des abgewickelten Umfangs erfolgt.

8. Verfahren nach einem oder mehreren der vorstehenden Ansprüche, **dadurch gekennzeichnet, daß** die Sätze mit Bildinformationen des Inspektionsergebnisses als Bild auf einem Monitor angezeigt werden, wobei ein Ausmessen einer Strecke, eines Umfangs und/oder einer Fläche im Monitorbild der Umfangsabwicklung mittels eines Cursors erfolgt.

9. Verfahren nach einem oder mehreren der vorstehenden Ansprüche, **dadurch gekennzeichnet, daß** eine Darstellung einer Detailliste auf dem Monitorbild, eine Markierung eines Elementes der Detailliste und/oder eines Details einer Umfangsabwicklung und/oder ein Gesamtbild der Umfangsabwicklung in unterschiedlichen Bildbereichen gleichzeitig auf dem Monitor erfolgt.

10. Verfahren nach einem oder mehreren der vorstehenden Ansprüche, **dadurch gekennzeichnet, daß** zwischen den Bildbereichen eine Zuordnung automatisch durch Markieren in einem Bildbereich erfolgt.

11. Verfahren nach einem oder mehreren der vorstehenden Ansprüche, **dadurch gekennzeichnet, daß** die Schnittlage zur Darstellung eines abgewickelten Rohrumfangs automatisch von einem Schwerkraftsensor vorgegeben wird.

12. Verfahren nach einem oder mehreren der vorstehenden Ansprüche, **dadurch gekennzeichnet, daß** Bildverzerrungen automatisch zu einem wahren Abbild des Rohrumfangs mittels Software ausgeglichen werden.

13. Verfahren nach einem oder mehreren der vorstehenden Anspruch, **dadurch gekennzeichnet, dass** nach einem Startsignal automatisch das fahrbare Rohrinspektionsgerät in Bewegung gesetzt wird und dabei ein Bildinforationsstrom erzeugt wird, der einer mathematischen Verarbeitung zur Mustererkennung unterzogen wird und bei Vorliegen eines vorgegebenen Musterschwellwertes ein Signal generiert wird, wobei das Signal zur Speicherung einer Ortsinformation und/oder
zur Steuerung des Fahrwagens und/oder
zur Ingangsetzung einer Drehbewegung eines auf die Rohroberfläche gerichteten Kamera und/oder
zur Ansteuerung von Schwenkantrieben einer Kamera, um die Kamera auf ein Detail der Rohroberfläche zu richten,
verwendet wird.

14. Verfahren nach einem oder mehreren der vorstehenden Ansprüche, **dadurch gekennzeichnet, dass** der zweite Satz der Bildinformation einer Verarbeitung zur Mustererkennung, insbesondere zur Kantenerkennung, unterzogen wird und vorzugsweise der Abstand der Kanten von einander automatisch bestimmt wird, und aus den Werten ein Meßwert, vorzugsweise ein minimaler und maximaler Abstand, ermittelt wird, der insbesondere mit einem vorgegebenen Toleranzbereich verglichen wird, wobei ein Überschreiten oder Unterschreiten des vorgegebenen Bereiches ein Signal erzeugt und zur Anzeige und/oder Speicherung gebracht wird.

15. Verfahren nach einem oder mehreren der vorstehenden Ansprüche, **dadurch gekennzeichnet, dass** nur der zu Bildern zusammengesetzten zweite Satz von Bildinformationen angezeigt, gespeichert und/oder dokumentiert wird, insbesondere nur Bilder von Details und/oder von Abwicklungen von Fügestellen.

16. Verfahren nach einem oder mehreren der vorstehenden Ansprüche, **dadurch gekennzeichnet, dass** nur Bilder von Fügestellen angezeigt, gespeichert und/oder dokumentiert werden, deren Mustererkennung ein Überschreiten des vorgegebenen Toleranzbereichs angezeigt hat.

17. Verfahren nach einem oder mehreren der vorstehenden Ansprüche, **dadurch gekennzeichnet, dass** zwischen den als Abwicklung dargestellten Fügestellen in verringerter Auflösung der abgewickelte Umfang des zwischen den Fügestellen liegenden Rohrteils dargestellt wird.

## Claims

1. A method for operating a mobile pipe inspection device, which encompasses a camera head, which can be pivoted about two axes located at right angles to one another and the pivoting motions of which are caused by remotely controllable motors and at least one pivoting motion of which is measured by means of a swiveling angle sensing device, the measuring signal of which can be displayed and evaluated on a monitor, **characterized in that** two sets of image information are prepared, a first set of which includes image information of the entire pipe surface, and a second set of which includes information of details of the pipe surface and an automatic assignment of the two sets of information to one another takes place at least with respect to the location in the pipe section and the angle position.

2. The method according to claim 1, **characterized in that** the first set of image information is preferably subjected to a processing for identifying patterns, in particular of flanges, and that signals are created therefrom, preferably for transmitting them to a control.

3. The method according to claim 1 or 2, **characterized in that** the first set of image information is stored and/or displayed in the form of a visual development.

4. The method according to claim 1, 2, or 3,
**characterized in that** the second set of image information is put together, stored and/or displayed in the form of a single image, e.g., the development of a pipe patch or in the form of an image of a branch or of a damaged spot.

5. The method according to one or several of the preceding claims, **characterized in that** the generation of the first and of the second set of image information takes place chronologically separate from one another and **in that** an assignment of the two sets relating to path information and/or angle information stored in response to the generation of the sets in a synchronous manner, takes place only later.

6. The method according to one or several the preceding claims, **characterized in that** the recording of the first set takes place during a drive through the pipe section to the inspected, preferably in one direction and with a speed, which preferably remains the same.

7. The method according to one or several the preceding claims, **characterized in that** an automatic assignment of one or several of the inspected details to a location of the developed periphery takes place.

8. The method according to one or several of the preceding claims, **characterized in that** the sets comprising image information of the inspection result are displayed as image on a monitor, wherein a measuring of a section, of a periphery and/or of a surface in the monitor image of the peripheral development takes place by means of a cursor.

9. The method according to one or several of the preceding claims, **characterized in that** a display of a detail list on the monitor image, a marking of an element of the detail list and/or of a detail of a peripheral development and/or a total image of the peripheral development takes place in different image ranges on the monitor at the same time.

10. The method according to one or several of the preceding claims, **characterized in that** an assignment takes place automatically between the image areas by marking in one image range.

11. The method according to one or several of the preceding claims, **characterized in that** the position of the sectional view for displaying a developed pipe periphery is automatically provided by a gravity sensor.

12. The method according to one or several of the preceding claims, **characterized in that** image distortions are automatically compensated by means of software into a true copy of the pipe periphery.

13. The method according to one or several of the preceding claims, **characterized in that** the mobile pipe inspection device is automatically set into motion and that a flow of image information is generated thereby, which is subjected to a mathematical processing for identifying patterns and **in that** a signal is generated in the event that a provided pattern level is present, wherein the signal is used for storing a location information and/or
for controlling the carriage and/or
for starting a rotary motion of a camera directed onto the pipe surface and/or
for activating swivel drives of a camera, for the purpose of directing the camera onto a detail of the pipe surface.

14. The method according to one or several of the preceding claims, **characterized in that** the second set of the image information is subjected to a processing for a pattern identification, in particular for a flange identification and **in that** the distance of the flanges from one another is preferably determined automatically and **in that** a measuring value, preferably a minimal and a maximal distance, is determined from the values, said measuring value being compared in particular to a provided tolerance range, wherein an exceeding or undershooting of the provided area generates a signal and is displayed and/or stored.

15. The method according to one or several of the preceding claims, **characterized in that** only the second set of image information, which is pieced together to form images, is displayed, stored and/or documented, in particular only images of details and/or of developments of joints.

16. The method according to one or several of the preceding claims, **characterized in that** only images of joints are displayed, stored and/or documented, the pattern identification of which has displayed an exceeding of the provided tolerance range.

17. The method according to one or several of the preceding claims, **characterized in that** the developed periphery of the pipe part located between the joints is illustrated in a reduced resolution between the joints, which are displayed as developments.

## Revendications

1. Procédé pour l'utilisation d'un appareil mobile d'inspection de tuyaux, comportant une tête de caméra susceptible de pivoter autour de deux axes formant un angle droit entre eux, dont les mouvements de pivotement sont produits par des moteurs télécommandés et dont au moins un mouvement de pivotement est mesuré au moyen d'un capteur de mesure d'angle de rotation, dont le signal de mesure peut être représenté sur un écran et évalué, **caractérisé en ce que** deux séries d'informations en images sont réalisées, parmi lesquelles une première série d'informations en images comprend l'ensemble de la surface du tuyau et une deuxième série d'informations comprend des détails de la surface de tuyau, et une affectation automatique mutuelle des deux séries d'informations ayant lieu au moins par rapport à l'emplacement dans le tronçon de tuyau et à la position d'angle.

2. Procédé selon la revendication 1, **caractérisé en ce que** la première série d'informations en images, de préférence d'un traitement pour la reconnaissance de motifs, en particulier d'arêtes, est soumise et des signaux, de préférence pour la transmission à une commande, sont produits.

3. Procédé selon l'une des revendications 1 ou 2, **caractérisé en ce que** la première série d'informations en images, constituée sous la forme d'une projection développée de la surface de tuyau, est enregistrée et/ou affichée.

4. Procédé selon l'une des revendications 1, 2 ou 3, **caractérisé en ce que** la deuxième série d'informations en images, constituée sous la forme d'une image unique, par exemple du développement d'un joint de tuyau ou d'une image d'un embranchement ou d'un endommagement, est enregistrée et/ou représentée.

5. Procédé selon l'une ou plusieurs des revendications précédentes, **caractérisé en ce que** la production de la première et de la deuxième série d'informations en images est espacée dans le temps, et l'affectation des deux séries est réalisée plus tard, par des informations de parcours et/ou des informations d'angle enregistrées de façon synchrone lors de la production des séries.

6. Procédé selon l'une ou plusieurs des revendications précédentes, **caractérisé en ce que** l'enregistrement de la première série a lieu pendant un déplacement à travers le tronçon de tuyau à inspecter, de préférence dans une direction et à une vitesse de préférence constante.

7. Procédé selon l'une ou plusieurs des revendications précédentes, **caractérisé en ce qu'**une affectation automatique d'un ou de plusieurs détails inspectés est réalisée par rapport à un endroit de la circonférence développée.

8. Procédé selon l'une ou plusieurs des revendications précédentes, **caractérisé en ce que** les séries sont affichées en tant qu'images sur un écran, avec des informations imagées sur le résultat d'inspection, une mesure d'un parcours, d'une circonférence et/ou d'une surface étant effectuée au moyen d'un curseur, dans l'image du développement circonférentiel qui est affichée à l'écran.

9. Procédé selon l'une ou plusieurs des revendications précédentes, **caractérisé en ce qu'**une représentation d'une liste de détails sur l'image affichée à l'écran, un marquage d'un élément de la liste de détails et/ou d'un détail d'un développement circonférentiel et/ou une image globale du développement circonférentiel, s'affichent simultanément dans différentes zones d'image sur l'écran.

10. Procédé selon l'une ou plusieurs des revendications précédentes, **caractérisé en ce qu'**une affectation automatique entre les zones d'image est effectuée par marquage dans une zone d'image.

11. Procédé selon l'une ou plusieurs des revendications précédentes, **caractérisé en ce que** la position de coupe pour la représentation d'une circonférence de tuyau développée est indiquée automatiquement par un capteur de gravité.

12. Procédé selon l'une ou plusieurs des revendications précédentes, **caractérisé en ce que** des distorsions d'image sont corrigées automatiquement au moyen d'un logiciel, pour obtenir une image réelle de la circonférence de tuyau.

13. Procédé selon l'une ou plusieurs des revendications précédentes, **caractérisé en ce qu'**après un signal de départ, l'appareil d'inspection de tuyaux est mis en mouvement automatiquement et un flux d'informations imagées est produit dans le même temps et soumis à un traitement mathématique pour la reconnaissance de motifs, et un signal est généré en présence d'une valeur seuil prédéfinie pour le motif, le signal étant utilisé pour l'enregistrement d'une information de localisation et/ou
pour la commande du chariot roulant et/ou
pour la mise en marche d'un mouvement rotatif d'une caméra orientée vers la surface de tuyau et/ou
pour l'actionnement d'entraînements de pivotement d'une caméra, pour orienter la caméra vers un détail de la surface de tuyau.

14. Procédé selon l'une ou plusieurs des revendications précédentes, **caractérisé en ce que** la deuxième série d'informations en images est soumise à un traitement pour la reconnaissance de motifs, en particulier pour la reconnaissance d'arêtes, et l'écart entre les arêtes est de préférence déterminé automatiquement, et une valeur de mesure est déterminée à partir des valeurs, de préférence un écart minimal et un écart maximal, qui est notamment comparé avec une plage de tolérance prédéfinie, un niveau supérieur ou inférieur à la plage prédéfinie produisant un signal et étant affiché et/ou enregistré.

15. Procédé selon l'une ou plusieurs des revendications précédentes, **caractérisé en ce que** seule la deuxième série d'informations en images, constituée d'images, est affichée, enregistrée et/ou documentée, en particulier seulement les images de détails et/ou de développements de joints.

16. Procédé selon l'une ou plusieurs des revendications précédentes, **caractérisé en ce que** seules des images de joints dont la reconnaissance de motifs a indiqué un dépassement de la plage de tolérance prédéfinie sont affichées, enregistrées et/ou documentées.

17. Procédé selon l'une ou plusieurs des revendications précédentes, **caractérisé en ce qu'**entre les joints représentés comme des développements, la circonférence développée de la partie de tuyau située entre les joints est représentée dans une résolution réduite.
